# EUROPÄISCHE PATENTSCHRIFT

(11) **EP 3 985 839 B1**
(45) Veröffentlichungstag und Bekanntmachung des Hinweises auf die Patenterteilung: **18.06.2025**
(21) Anmeldenummer: 21201859.2
(22) Anmeldetag: 11.10.2021
(51) Int. Cl.: H02K 1/32, H02K 9/19, H02K 7/116, H02K 5/20

(54) **ELEKTROANTRIEB**
ELECTRIC DRIVE
ENTRAÎNEMENT ÉLECTRIQUE

(30) Priorität: 14.10.2020 CN 202011095755
(43) Veröffentlichungstag der Anmeldung: 20.04.2022
(73) Patentinhaber: ZF Friedrichshafen AG, 88046 Friedrichshafen (DE)
(72) Erfinder: Dong, Ye, Shanghai, 201615 (CN); Wang, Yue, Shanghai, 201615 (CN); Ye, Weichen, Shanghai, 201615 (CN)

(56) Entgegenhaltungen:
- EP-A1- 0 587 389
- EP-A1- 3 260 736
- WO-A1-2016/066215
- WO-A1-2020/069744

## Beschreibung

### Technisches Gebiet

Die vorliegende Erfindung betrifft einen Elektroantrieb, insbesondere ein Elektroantriebssystem mit einer Rotorkühlung.

### Stand der Technik

Bei einem Elektroantrieb mit einer koaxialen Anordnung ist eine Ausgangswelle, die Leistung ausgibt, koaxial innerhalb einer hohlen Rotorwelle eines Elektromotors angeordnet. Zum Kühlen eines Rotors wird in der Regel das Fließen einer Schmierflüssigkeit/Kühlflüssigkeit in einen Spalt zwischen der Rotorwelle und der Ausgangswelle bewirkt. Aufgrund der geringen Größe des Spalts zwischen der Rotorwelle und der Ausgangswelle stellt sich jedoch ein Problem, die Schmierflüssigkeit/Kühlflüssigkeit reibungslos in den Spalt zwischen der Rotorwelle und der Ausgangswelle einzuleiten.

Ein Elektroantrieb mit den im Oberbegriff des unabhängigen Patentanspruchs angeführten Merkmalen ist bereits mit der EP 0 587 389 A1 bekannt geworden. Dabei sind die an der getriebeabgewandten Axialseite des Antriebs an einem Stützelement bzw. einem Lagerschild angeordneten Rotorwellenlager und Ausgangswellenlager innerhalb eines axialen Bauraums positioniert, welcher von der Rotorwelle und der Ausgangswelle jeweils zugeordneten Dichtelementen begrenzt wird. Die WO 2020/069744 A1 offenbart einen weiteren, strukturell vergleichbaren Elektroantrieb, bei dem die der Rotorwelle zugeordneten Lager und Dichtelemente paarweise axial gestaffelt zu den der Ausgangswelle zugeordneten Lager und Dichtelementen angeordnet sind. Zwischen der Rotorwellendichtung und der Ausgangswellendichtung ist dort ein Ausgangswellenlager vorgesehen. Bei den angeführten Lösungen ist ein von den beiden genannten Dichtelementen aufgespannter Raumbereich vergleichsweise groß ausgebildet. Die Erfindung stellt sich die Aufgabe, die Kühlung bei einem Elektroantrieb der vorgenannten Art weiter zu verbessern.

### Offenbarung der Erfindung

Die vorliegende Erfindung stellt einen Elektroantrieb bereit, mit dem die vorstehende Aufgabe gelöst wird, wobei der Elektroantrieb ein Elektromotormodul und ein an das Elektromotormodul angeschlossenes Getriebemechanismusmodul umfasst, wobei das Elektromotormodul eine an einem Rotor befestigte hohle Rotorwelle umfasst, die Leistung auf das Getriebemechanismusmodul überträgt, wobei das Getriebemechanismusmodul eine Ausgangswelle umfasst, die koaxial innerhalb der Rotorwelle angeordnet ist, wobei die Rotorwelle und die Ausgangswelle entlang einer axialen Richtung des Elektromotormoduls verlaufen und zwischen der Rotorwelle und der Ausgangswelle ein Fließraum begrenzt ist, wobei an einem in der axialen Richtung dem Getriebemechanismusmodul abgewandten Ende des Elektromotormoduls sich die Ausgangswelle über die Rotorwelle hinaus erstreckt und ein Stützelement, das die Rotorwelle und die Ausgangswelle umgibt, vorgesehen ist, wobei zwischen dem Stützelement und der Rotorwelle ein erstes Dichtelement und zwischen dem Stützelement und dem sich über die Rotorwelle hinaus erstreckenden Teil der Ausgangswelle ein zweites Dichtelement vorgesehen ist, sodass zwischen der Rotorwelle, der Ausgangswelle und dem Stützelement ein mit dem Fließraum fluidisch kommunizierender Hohlraum gebildet ist, und wobei in dem Stützelement ein Durchgangsloch, das den Hohlraum mit der Umgebung verbindet, ausgebildet ist.

Da erfindungsgemäß vorgesehen ist, dass das erste Dichtelement und das zweite Dichtelement in der axialen Richtung zwischen einem Lager für die Rotorwelle und einem Lager für die Ausgangswelle angeordnet sind, kann an einem Eingang/Ausgang des Fließraums zwischen der Rotorwelle und der Ausgangswelle ein Hohlraum mit kleinen Dimensionen vorgesehen sein, um eine Schmier-/Kühlleitung schnell herzustellen.

### Kurzbeschreibung der Figuren

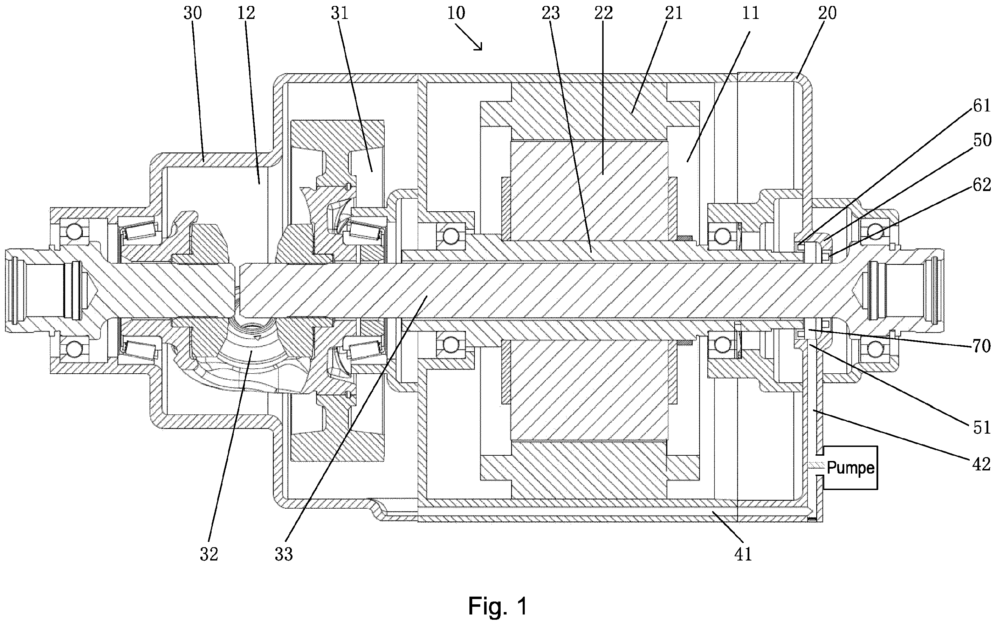

Fig. 1 zeigt eine Schnittsicht eines Elektroantriebs nach dem ersten Ausführungsbeispiel der vorliegenden Erfindung.

### Ausführliche Ausführungsformen

Nachfolgend erfolgt eine nähere Beschreibung anhand eines Ausführungsbeispiels der vorliegenden Erfindung unter Bezugnahme auf die beiliegende Zeichnung.

Fig. 1 zeigt einen Elektroantrieb 10 nach einem Ausführungsbeispiel der vorliegenden Erfindung in einer Schnittansicht. Der Elektroantrieb 10 kann ein Elektroantrieb für ein Kraftfahrzeug sein, worauf jedoch die vorliegende Erfindung nicht eingeschränkt wird. Der Elektroantrieb 10 weist ein Elektromotormodul 11 und ein Getriebemechanismusmodul 12 auf. Das Elektromotormodul 11 überträgt Leistung auf das Getriebemechanismusmodul 12, und das Getriebemechanismusmodul 12 überträgt die Leistung auf Räder des Kraftfahrzeugs, um das Fahrzeug anzutreiben. Optional kann der Elektroantrieb 10 ferner ein Wechselrichtermodul (nicht dargestellt) aufweisen, das zum Versorgen des Elektromotormoduls 11 mit Drehstrom dient.

Das Elektromotormodul 11 umfasst ein Hauptgehäuse 20 sowie einen Stator 21 und einen Rotor 22, die in dem Hauptgehäuse 20 aufgenommen sind, wobei der Rotor 22 eine an dem Rotor 22 befestigte hohle Rotorwelle 23 aufweist. Ein Ende der Rotorwelle 23 in der axialen Richtung ist an das Getriebemechanismusmodul 12 gekoppelt. Konkret ist ein dem Getriebemechanismusmodul 12 zugewandtes Ende der Rotorwelle 23 durch ein Lager abgestützt, das in einem Lagersitz angeordnet ist, der in einer mit dem Hauptgehäuse 20 des Elektromotormoduls 11 einteilig ausgeformten Stützplatte/Endabdeckung angeordnet ist. Die Stützplatte/Endabdeckung trennt das Getriebemechanismusmodul 12 von dem Elektromotormodul 11. Die Rotorwelle 23 erstreckt sich durch die Stützplatte/Endabdeckung hindurch in das Getriebemechanismusmodul 12 und ist an einen Getriebemechanismus innerhalb des Getriebemechanismusmoduls 12 gekoppelt. An dem an das Getriebemechanismusmodul 12 gekoppelten Ende der Rotorwelle 23 in der axialen Richtung ist ein Zahnradabschnitt oder ein Ritzel ausgebildet. Ein dem Getriebemechanismusmodul 12 abgewandtes Ende der Rotorwelle 23 ist über ein Lager durch das Hauptgehäuse 20 drehbar abgestützt.

Das Getriebemechanismusmodul 12 ist an ein Ende des Elektromotormoduls 11 angeschlossen. In diesem Beispiel kann das Getriebemechanismusmodul 12 ein Gehäuse 30 und einen innerhalb des Gehäuses vorgesehenen Getriebemechanismus umfassen. Der Getriebemechanismus umfasst beispielsweise ein Untersetzungsgetriebe (nicht dargestellt) und ein Differenzial 32. In diesem Beispiel umfasst das Untersetzungsgetriebe ein Antriebsrad mit einem großen Durchmesser und ein angetriebenes Rad mit einem kleinen Durchmesser. Das Antriebsrad und das angetriebene Rad sind an ein und derselben Getriebewelle befestigt und drehen sich somit als Ganzes. Der Zahnradabschnitt oder das Ritzel der Rotorwelle 23 steht in Eingriff mit dem Antriebsrad des Untersetzungsgetriebes, während das angetriebene Rad des Untersetzungsgetriebes Leistung auf das Differenzial 32 überträgt. Das angetriebene Rad des Untersetzungsgetriebes steht in Eingriff mit einem Zahnrad / einer Verzahnung 31 an einem Differenzialgehäuse des Differenzials 32 und treibt somit das Differenzial 32 zum Drehen an. Das Differenzial 32 ist über ein Lager drehbar an einem Gehäuse des Getriebemechanismusmoduls 12 befestigt. Das Differenzial 32 umfasst zwei Ausgangswellen (Halbwellen), wovon eine Ausgangswelle 33 koaxial durch die hohle Rotorwelle 23 des Rotors des Elektromotors hindurchgeht und somit koaxial innerhalb der Rotorwelle 23 angeordnet ist. Die Ausgangswelle 33 ist an einem dem Getriebemechanismusmodul 12 abgewandten Ende über ein Lager drehbar abgestützt. Zwischen der Rotorwelle 23 und der koaxial innerhalb der Rotorwelle 23 angeordneten Ausgangswelle 33 wird ein sich axial erstreckender ringförmiger Spalt begrenzt. Wie unten beschrieben, dient der ringförmige Spalt als Fließraum, in dem eine Schmierflüssigkeit fließen kann. Hierbei ist es darauf hinzuweisen, dass der Getriebemechanismus des Elektroantriebs 10 nach der vorliegenden Erfindung nicht auf das Untersetzungsgetriebe und das Differenzial 32 eingeschränkt wird und vielmehr ein anderer, den Fachleuten auf diesem Gebiet naheliegender Getriebemechanismus sein kann.

Nachfolgend wird auf ein Kühlsystem des Elektroantriebs 10 der vorliegenden Erfindung näher eingegangen.

Zusammenfassend leitet das Kühlsystem des Elektroantriebs 10 eine Schmierflüssigkeit innerhalb des Getriebemechanismusmoduls 12 in ein dem Getriebemechanismusmodul 12 abgewandtes Ende des Fließraums zwischen der Rotorwelle 23 und der koaxial innerhalb der Rotorwelle 23 angeordneten Ausgangswelle 33, sodass die Schmierflüssigkeit durch den Fließraum zwischen der Rotorwelle 23 und der Ausgangswelle 33 fließt und schließlich über das dem Getriebemechanismusmodul 12 zugewandte andere Ende des Fließraums zurück in das Getriebemechanismusmodul 12 fließt.

Gemäß dem Ausführungsbeispiel der vorliegenden Erfindung ist in dem Hauptgehäuse 20 des Elektromotormoduls 11 ein Schmierflüssigkeitskanal ausgebildet, der einen ersten Kanalabschnitt 41 und einen zweiten Kanalabschnitt 42 umfasst. Ein erstes Ende des ersten Kanalabschnitts 41 ist mit dem Getriebemechanismusmodul 12 fluidisch kommunizierend und ein zweites Ende des ersten Kanalabschnitts 41 ist an einen Einlass einer Pumpe gekoppelt. Ein erstes Ende des zweiten Kanalabschnitts 42 ist an einen Auslass einer Pumpe gekoppelt und ein zweites Ende des zweiten Kanalabschnitts 42 ist mit dem Fließraum zwischen der Rotorwelle 23 und der Ausgangswelle 33 fluidisch kommunizierend. Gemäß der vorliegenden Erfindung kann die Pumpe in den Elektroantrieb 10 integriert oder außerhalb des Elektroantriebs 10 angeordnet sein und dabei kann es sich um eine mechanische Pumpe oder eine elektronische Pumpe handeln. Der Schmierflüssigkeitskanal muss nicht unbedingt in dem Hauptgehäuse 20 des Elektromotormoduls 11 ausgebildet sein und kann vielmehr durch eine außerhalb des Elektroantriebs 10 vorgesehene Rohrleitung bereitgestellt werden.

Wie in der Zeichnung gezeigt, erstreckt sich die Ausgangswelle 33 an einem dem Getriebemechanismusmodul 12 abgewandten Ende über die Rotorwelle 23 hinaus. Des Weiteren ist an diesem Ende ein Stützelement 50, das die Rotorwelle 23 und die Ausgangswelle 33 umgibt, vorgesehen. Dabei ist zwischen dem Stützelement 50 und der Rotorwelle 23 ein erstes Dichtelement 61 und zwischen dem Stützelement 50 und dem sich über die Rotorwelle 23 hinaus erstreckenden Teil der Ausgangswelle 33 ein zweites Dichtelement 62 vorgesehen, sodass zwischen der Rotorwelle 23, der Ausgangswelle 33 und dem Stützelement 50 ein mit dem Fließraum fluidisch kommunizierender Hohlraum 70 gebildet wird. In dem Stützelement 50 ist ferner ein Durchgangsloch 51, das den Hohlraum 70 mit der Umgebung verbinden kann, ausgebildet. Konkret ist das Durchgangsloch 51 mit dem zweiten Ende des zweiten Kanalabschnitts 42 fluidisch kommunizierend.

Das Stützelement 50 kann einteilig mit dem Hauptgehäuse 20 des Elektromotormoduls 11 ausgeformt sein. Des Weiteren kann das Stützelement 50 an das Hauptgehäuse 20 des Elektromotormoduls 11 angeschlossen sein und umfasst einem Lagersitz des Lagers für die Ausgangswelle 33. Das Lager der Rotorwelle 23 ist durch das Hauptgehäuse 20 abgestützt. Das erste Dichtelement 61 und das zweite Dichtelement 62 sind in der axialen Richtung zwischen dem Lager für die Rotorwelle 23 und dem Lager für die Ausgangswelle 33 angeordnet. Somit können das erste Dichtelement 61 und das zweite Dichtelement 62 nahe genug beieinander angeordnet sein, um somit einen erwünschten, klein dimensionierten Hohlraum 70 zu erzielen.

Ein radialer Spalt zwischen der Rotorwelle 23 und der Ausgangswelle 33 ist in der Regel auf 2,5 bis 5 mm eingestellt und zum Erzielen der optimalen technischen Auswirkung kann ein radialer Abstand zwischen dem ersten Dichtelement 61 und dem zweiten Dichtelement 62 auf 7 bis 10 mm eingestellt sein. Das Volumen des Hohlraums 70 ist vorzugsweise auf 0,01 bis 0,02 L eingestellt.

Mit dem klein dimensionierten Hohlraum 70 können die folgenden technischen Auswirkungen erreicht werden: 1. Aufgrund des kleinen Volumens des Hohlraums kann der Hohlraum schnell durch die Schmierflüssigkeit vollgefüllt werden, sodass ein Schmier-/Kühlkreislauf schnell hergestellt und somit der Rotor schnell gekühlt werden kann. 2. In der radialen Richtung weist der Hohlraum eine geringe Abmessung auf, sodass beim Betrieb der maximale Druck verringert und somit der Druck an der Stelle eines Wellendichtelements reduziert werden kann, was zweckmäßig für das Wellendichtelement ist. 3. Aufgrund der kleinen Abmessung kann der Hohlraum schnell durch die Schmierflüssigkeit vollgefüllt werden und die Menge der in die Schmierflüssigkeit eingemischten Luft wird verringert, wodurch das Risiko der Kavitationserosion verringert und das NVH-Verhalten verbessert wird.

In Fig. 1 ist das Stützelement 50 einteilig mit dem Hauptgehäuse 20 des Elektromotormoduls 11 ausgeformt und der Lagersitz des Lagers für die Ausgangswelle 33 wird durch ein separates Bauteil gebildet. Jedoch wird die vorliegende Erfindung nicht darauf eingeschränkt und der Lagersitz des Lagers für die Ausgangswelle 33 kann alternativ dazu an dem Stützelement 50 für das erste Dichtelement 61 und das zweite Dichtelement 62 ausgebildet sein. Soweit strukturell und räumlich möglich, kann das Stützelement 50 für das erste Dichtelement 61 und das zweite Dichtelement 62 auch durch ein relativ zu dem Hauptgehäuse 20 des Elektromotormoduls 11 befestigtes, separates Bauteil gebildet werden.

In dem obigen Ausführungsbeispiel ist das erste Dichtelement 61 in der radialen Richtung zwischen dem Stützelement 50 und der Rotorwelle 23 angeordnet, während das zweite Dichtelement 62 in der radialen Richtung zwischen dem Stützelement 50 und der Ausgangswelle 33 angeordnet ist. Jedoch wird die vorliegende Erfindung nicht darauf eingeschränkt und beispielsweise kann das erste Dichtelement 61 alternativ dazu in der axialen Richtung zwischen dem Stützelement 50 und der Rotorwelle 23 angeordnet sein, soweit zwischen der Rotorwelle 23, der Ausgangswelle 33 und dem Stützelement 50 ein mit dem Fließraum zwischen der Rotorwelle 23 und der Ausgangswelle 33 fluidisch kommunizierender Hohlraum 70 gebildet werden kann.

Obwohl die spezifischen Ausführungsformen der vorliegenden Erfindung oben beschrieben wurden, soll der Fachmann auf diesem Gebiet verstehen, dass dies nur Beispiele sind, und dass der Schutzumfang der vorliegenden Erfindung durch die beigefügten Ansprüche definiert wird. Fachleute auf diesem Gebiet können ohne Verlassen der Prinzipien und der Grundideen der vorliegenden Erfindung verschiedene Abänderungen und Modifikationen an solchen Ausführungsformen vornehmen, welche Abänderungen und Modifikationen ebenfalls unter den Schutzumfang der Erfindung fallen.

## Patentansprüche

1. Elektroantrieb (10), umfassend
- ein Elektromotormodul (11) und
- ein an das Elektromotormodul (11) angeschlossenes Getriebemechanismusmodul (11), wobei
- das Elektromotormodul (11) eine an einem Rotor (22) befestigte hohle Rotorwelle (23) umfasst, die Leistung auf das Getriebemechanismusmodul (11) überträgt, wobei
- das Getriebemechanismusmodul (11) eine Ausgangswelle (33) umfasst, die koaxial innerhalb der Rotorwelle (23) angeordnet ist, wobei
- die Rotorwelle (23) und die Ausgangswelle (33) entlang einer axialen Richtung des Elektromotormoduls (11) verlaufen und zwischen der Rotorwelle (23) und der Ausgangswelle (33) ein Fließraum begrenzt ist, wobei
- an einem in der axialen Richtung dem Getriebemechanismusmodul (11) abgewandten Ende des Elektromotormoduls (11) sich die Ausgangswelle (33) über die Rotorwelle (23) hinaus erstreckt und wobei
- ein Stützelement (50), das die Rotorwelle (23) und die Ausgangswelle (33) umgibt, vorgesehen ist, wobei
- zwischen dem Stützelement 50) und der Rotorwelle (23) ein erstes Dichtelement (61) und
- zwischen dem Stützelement (50) und dem sich über die Rotorwelle (23) hinaus erstreckenden Teil der Ausgangswelle (33) ein zweites Dichtelement (62) vorgesehen ist, sodass
- zwischen der Rotorwelle (23), der Ausgangswelle (33) und dem Stützelement (50) ein mit dem Fließraum fluidisch kommunizierender Hohlraum (70) gebildet ist, und wobei
- in dem Stützelement (50) ein Durchgangsloch (51), das den Hohlraum (70) mit der Umgebung verbindet, ausgebildet ist,
**dadurch gekennzeichnet, dass**
- das erste Dichtelement (61) und das zweite Dichtelement (62) in der axialen Richtung zwischen einem Lager für die Rotorwelle (23) und einem Lager für die Ausgangswelle (33) angeordnet sind.

2. Elektroantrieb nach Anspruch 1, **dadurch gekennzeichnet, dass** das Durchgangsloch (51) mit einem Schmierflüssigkeitskanal (41, 42) fluidisch kommunizierend ist.

3. Elektroantrieb nach Anspruch 1 oder 2, **dadurch gekennzeichnet, dass** das Getriebemechanismusmodul (11) ein Untersetzungsgetriebe und ein Differenzial (32) umfasst, wobei die Rotorwelle (23) über das Untersetzungsgetriebe an ein Differenzialgehäuse des Differenzials (32) gekoppelt ist und es sich bei der Ausgangswelle (33) um eine Halbwelle des Differenzials (32) handelt.

4. Elektroantrieb nach einem der Ansprüche 1-3, **dadurch gekennzeichnet, dass** das Stützelement (50) an ein Hauptgehäuse (20) des Elektromotormoduls (11) angeschlossen und das Stützelement (50) mit einem Lagersitz des Lagers für die Ausgangswelle (33) versehen ist.

5. Elektroantrieb nach einem der Ansprüche 4, **dadurch gekennzeichnet, dass** der Schmierflüssigkeitskanal (41, 42) in dem Hauptgehäuse (20) des Elektromotormoduls (11) angeordnet ist.

6. Elektroantrieb nach einem der Ansprüche 2-5, **dadurch gekennzeichnet, dass** der Elektroantrieb (10) eine Pumpe umfasst, die eine Schmierflüssigkeit in dem Getriebemechanismusmodul (11) über den Schmierflüssigkeitskanal (41, 42) in das Durchgangsloch (51) pumpt.

7. Elektroantrieb nach einem der Ansprüche 1-6, **dadurch gekennzeichnet, dass** das erste Dichtelement (61) in der axialen oder radialen Richtung zwischen der Rotorwelle (23) und dem Stützelement (50) angeordnet ist und das zweite Dichtelement (62) in der radialen Richtung zwischen der Ausgangswelle (33) und dem Stützelement (50) angeordnet ist.

8. Elektroantrieb nach einem der Ansprüche 1-7, **dadurch gekennzeichnet, dass** ein radialer Spalt zwischen der Rotorwelle (23) und der Ausgangswelle (33) im Bereich von 2,5 bis 5 mm eingestellt ist und ein radialer Abstand zwischen dem ersten Dichtelement (61) und dem zweiten Dichtelement (62) im Bereich von 7 bis 10 mm eingestellt ist.

9. Elektroantrieb nach einem der Ansprüche 1-8, **dadurch gekennzeichnet, dass** das Volumen des Hohlraums (70) im Bereich von 0,01 bis 0,02 L eingestellt ist.

## Claims

1. Electric drive (10), comprising
- an electric motor module (11) and
- a transmission mechanism module (11) connected to the electric motor module (11), wherein
- the electric motor module (11) comprises a hollow rotor shaft (23) which is attached to a rotor (22) and transmits power to the transmission mechanism module (11), wherein
- the transmission mechanism module (11) comprises an output shaft (33) which is arranged coaxially within the rotor shaft (23), wherein
- the rotor shaft (23) and the output shaft (33) run along an axial direction of the electric motor module (11) and a flow space is delimited between the rotor shaft (23) and the output shaft (33), wherein
- the output shaft (33) extends beyond the rotor shaft (23) at an end of the electric motor module (11) remote from the transmission mechanism module (11) in the axial direction, and wherein
- a support element (50) which surrounds the rotor shaft (23) and the output shaft (33) is provided, wherein
- a first sealing element (61) is provided between the support element (50) and the rotor shaft (23) and
- a second sealing element (62) is provided between the support element (50) and the portion of the output shaft (33) extending beyond the rotor shaft (23), so that
- a cavity (70) fluidically communicating with the flow space is formed between the rotor shaft (23), the output shaft (33) and the support element (50), and wherein
- a through-hole (51), which connects the cavity (70) to the surrounding area, is formed in the support element (50),
**characterized in that**
- the first sealing element (61) and the second sealing element (62) are arranged between a bearing for the rotor shaft (23) and a bearing for the output shaft (33) in the axial direction.

2. Electric drive according to Claim 1, **characterized in that** the through-hole (51) is in fluidic communication with a lubricating fluid channel (41, 42).

3. Electric drive according to Claim 1 or 2, **characterized in that** the transmission mechanism module (11) comprises a reduction gear and a differential (32), wherein the rotor shaft (23) is coupled to a differential housing of the differential (32) via the reduction gear and the output shaft (33) is a half-shaft of the differential (32).

4. Electric drive according to any of Claims 1-3, **characterized in that** the support element (50) is connected to a main housing (20) of the electric motor module (11) and the support element (50) is provided with a bearing seat of the bearing for the output shaft (33).

5. Electric drive according to any of Claims 4, **characterized in that** the lubricating fluid channel (41, 42) is arranged in the main housing (20) of the electric motor module (11).

6. Electric drive according to any of Claims 2-5, **characterized in that** the electric drive (10) comprises a pump which pumps a lubricating fluid in the transmission mechanism module (11) into the through-hole (51) via the lubricating fluid channel (41, 42).

7. Electric drive according to any of Claims 1-6, **characterized in that** the first sealing element (61) is arranged between the rotor shaft (23) and the support element (50) in the axial or radial direction and the second sealing element (62) is arranged between the output shaft (33) and the support element (50) in the radial direction.

8. Electric drive according to any of Claims 1-7, **characterized in that** a radial gap between the rotor shaft (23) and the output shaft (33) is set in the range of from 2.5 to 5 mm and a radial distance between the first sealing element (61) and the second sealing element (62) is set in the range of from 7 to 10 mm.

9. Electric drive according to any of Claims 1-8, **characterized in that** the volume of the cavity (70) is set in the range of from 0.01 to 0.02 L.

## Revendications

1. Système d'entraînement électrique (10) comprenant
- un module de moteur électrique (11), et
- un module de mécanisme de transmission (11), relié au module de moteur électrique (11), dans lequel
- le module de moteur électrique (11) comprend un arbre de rotor creux (23) fixé à un rotor (22), qui transmet la puissance au module de mécanisme de transmission (11),
- le module de mécanisme de transmission (11) comprend un arbre de sortie (33) qui est agencé coaxialement à l'intérieur de l'arbre de rotor (23),
- l'arbre de rotor (23) et l'arbre de sortie (33) s'étendent dans une direction axiale du module de moteur électrique (11) et qu'un espace d'écoulement est délimité entre l'arbre de rotor (23) et l'arbre de sortie (33),
- à une extrémité du module de moteur électrique (11) opposée au module de mécanisme de transmission (11) dans la direction axiale, l'arbre de sortie (33) s'étend au-delà de l'arbre de rotor (23) et
- un élément de support (50) qui entoure l'arbre de rotor (23) et l'arbre de sortie (33) est prévu,
- un premier élément d'étanchéité (61) étant prévu entre l'élément de support (50) et l'arbre de rotor (23) et
- un deuxième élément d'étanchéité (62) est prévu entre l'élément de support (50) et la partie de l'arbre de sortie (33) s'étendant au-delà de l'arbre de rotor (23), de sorte que
- une cavité (70) en communication fluidique avec la chambre d'écoulement est formée entre l'arbre de rotor (23), l'arbre de sortie (33) et l'élément de support (50), et dans lequel
- un trou traversant (51) est aménagé dans l'élément de support (50), reliant la cavité (70) à l'environnement,
**caractérisé en ce que**
- le premier élément d'étanchéité (61) et le deuxième élément d'étanchéité (62) sont agencés dans la direction axiale entre un palier pour l'arbre de rotor (23) et un palier pour l'arbre de sortie (33).

2. Système d'entraînement électrique selon la revendication 1, **caractérisé en ce que** le trou traversant (51) est en communication fluidique avec un canal (41, 42) de fluide de lubrification.

3. Système d'entraînement électrique selon la revendication 1 ou la revendication 2, **caractérisé en ce que** le module de mécanisme de transmission (11) comprend un réducteur et un différentiel (32), l'arbre de rotor (23) étant relié par l'intermédiaire du réducteur à un carter de différentiel du différentiel (32) et l'arbre de sortie (33) étant un demi-arbre du différentiel (32).

4. Système d'entraînement électrique selon l'une des revendications 1 à 3, **caractérisé en ce que** l'élément de support (50) est raccordé à un boîtier principal (20) du module de moteur électrique (11) et l'élément de support (50) est pourvu d'un siège de palier pour le palier de l'arbre de sortie (33).

5. Système d'entraînement électrique selon la revendication 4, **caractérisé en ce que** le canal (41, 42) de fluide de lubrification est agencé dans le boîtier principal (20) du module de moteur électrique (11).

6. Système d'entraînement électrique selon l'une des revendications 2 à 5, **caractérisé en ce que** le système d'entraînement électrique (10) comprend une pompe qui pompe un fluide de lubrification dans le module de mécanisme de transmission (11) via le canal (41, 42) de fluide de lubrification dans le trou traversant (51).

7. Système d'entraînement électrique selon l'une des revendications 1 à 6, **caractérisé en ce que** le premier élément d'étanchéité (61) est agencé dans la direction axiale ou radiale entre l'arbre de rotor (23) et l'élément de support (50) et le deuxième élément d'étanchéité (62) est agencé dans la direction radiale entre l'arbre de sortie (33) et l'élément de support (50).

8. Système d'entraînement électrique selon l'une des revendications 1 à 7, **caractérisé en ce qu'**un interstice radial entre l'arbre de rotor (23) et l'arbre de sortie (33) est défini dans une gamme allant de 2,5 à 5mm, et **en ce qu'**une distance radiale entre le premier élément d'étanchéité (61) et le deuxième élément d'étanchéité (62) est définie dans une gamme allant de 7 à 10mm.

9. Système d'entraînement électrique selon l'une des revendications 1 à 8, **caractérisé en ce que** le volume de la cavité (70) est défini dans une gamme allant de 0,01 à 0,02 litre.
